(19)

Europäisches
Patentamt

European
Patent Office

Office européen
des brevets

(11) **EP 4 657 280 A1**

(12) **EUROPEAN PATENT APPLICATION**

(43) Date of publication:
**03.12.2025 Bulletin 2025/49**

(21) Application number: **25176680.4**

(22) Date of filing: **15.05.2025**

(51) International Patent Classification (IPC):
***G06F 16/34*** (2025.01)

(52) Cooperative Patent Classification (CPC):
**G06F 16/345**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.05.2024 US 202418680997**

(71) Applicant: **Microsoft Technology Licensing, LLC Redmond, WA 98052-6399 (US)**

(72) Inventors:
• **Liu, Zhongkai**
  **Redmond, WA 98052-6399 (US)**
• **Cao, Chenqian**
  **Redmond, WA 98052-6399 (US)**

(74) Representative: **Grünecker Patent- und Rechtsanwälte PartG mbB Leopoldstraße 4 80802 München (DE)**

(54) **ABSTRACTIVE AND EXTRACTIVE SUMMARIZATION OF TEXT**

(57)     Systems and methods implement a summarization model that includes a combination of abstractive and extractive summarization are provided. Extractive summarization is applied to identify the most salient sentences from a text corpus. Abstractive summarization is utilized to generate a topic summary based on filtered outputs from the extractive summarization.

```
                                            600

602  RECEIVE TEXT DATA

604  PERFORM TEXT PROCESSING ON THE TEXT DATA

606  PERFORM SENTENCE EMBEDDING ON EACH TOKEN
     GENERATED FROM TOKENIZATION

608  GENERATE A PLURALITY OF CLUSTERS BY APPLYING A
     CLUSTERING MODEL TO THE CONVERTED SENTENCES

610  DETERMINE A CLUSTER CENTROID

612  DETERMINE NEAREST NEIGHBORS TO THE CLUSTER
     CENTROID

614  DETERMINE A SIMILARITY SCORE BETWEEN A DEFINED
     NUMBER OF THE NEAREST NEIGHBORS

616  SIMILARITY SCORE GREATER THAN SIMILARITY SCORE
     THRESHOLD?

     NO                                      YES

618  GENERATE A FIRST SUMMARY     620  GENERATE A SECOND SUMMARY
     OF THE CLUSTER BY APPLYING         OF THE CLUSTER BY SELECTING
     ABSTRACTIVE SUMMARIZATION          THE NEAREST NEIGHBOR FROM
     TO THE DEFINED NUMBER OF           THE NEAREST NEIGHBORS AS
     THE NEAREST NEIGHBORS              THE SECOND SUMMARY
```

FIG. 6

**EP 4 657 280 A1**

## Description

BACKGROUND

An immense volume of unstructured text is being generated every second of the day. Manual summarization of this content is impractical and time-consuming, taking a significant amount of resources to analyze and process all the text. This is further exacerbated by the fact that text is typically full of disordered information.

In contrast to manual summarization, automatic summarization algorithms can process large amounts of text efficiently, making it scalable for handling massive datasets and saving time by quickly generating summaries without human intervention. This is particularly valuable in situations where time is limited, such as in customer support, where the companies need to produce summaries of customer feedback rapidly, address issues immediately, and thus improve the retention of customers.

Conventional automatic summarization techniques or workflows are primarily used for summarizing text information within a same context. For example, some common use cases include creating a summary for an academic article or summarizing a lecture given by a professor. Although the length of the text data could differ, they are all analyzed and summarized in the same context. However, these conventional summarization techniques are unable to summarize text information from different contexts. For example, for customer support cases, the text data contains groups of support tickets and each support ticket has its own context. This means that support is needed to summarize a group of thousands of support tickets, where each support ticket describes a different problem encountered by different people in different situations (e.g., different contexts). Conventional text summarization methodology cannot handle the text data in such a heterogeneous collection of contexts.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Example solutions for summarizing large amounts of diverse text include: receiving text data, the text data comprising information from a plurality of different users; performing text processing on the text data, the text processing comprising: converting text in the text data to string format; and applying tokenization to the converted text; performing sentence embedding on each token generated from the tokenization, the sentence embedding comprising converting sentences to fixed sized vectors in a continuous vector space; generating a plurality of clusters by applying a clustering model to the converted sentences; for each cluster in the plurality of clusters: determining a cluster centroid; determining nearest neighbors to the cluster centroid; determining a similarity score between a defined number of the nearest neighbors; comparing the similarity score to a similarity threshold; and upon the similarity score being less than the similarity threshold, generating a first summary of the cluster by applying abstractive summarization to the defined number of the nearest neighbors; and upon the similarity score being greater than the similarity threshold, generating a second summary of the cluster by selecting the nearest neighbor from the nearest neighbors as the second summary.

BRIEF DESCRIPTION OF THE DRAWINGS

The present description will be better understood from the following detailed description read considering the accompanying drawings, wherein:

FIG. 1 is a block diagram illustrating an example system for generating summaries using a hybrid summarization model;
FIG. 2 is a flowchart illustrating an example method for generating summaries using a hybrid summarization model;
FIG. 3 is a flowchart illustrating an example method for processing text;
FIG. 4 is a flowchart illustrating an example method for sentence embedding;
FIG. 5A is a graph illustrating results of an exemplary clustering model;
FIG. 5B is an illustrative example of a graph and formula for the K nearest neighbors algorithm using the Euclidean distance;
FIG. 6 is a flowchart illustrating an example method for generating summaries using a hybrid summarization model; and
FIG. 7 illustrates an example computing apparatus as a functional block diagram.

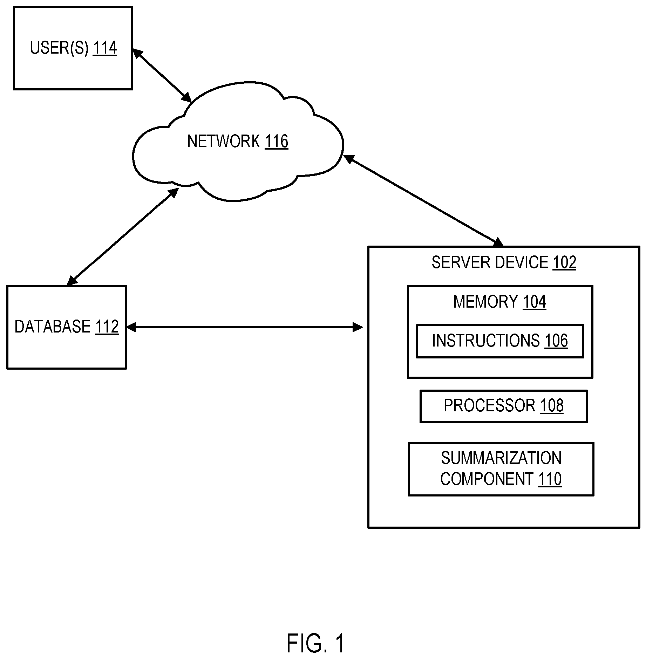

Corresponding reference characters indicate corresponding parts throughout the drawings. In FIGs. 1 to 7, the systems are illustrated as schematic drawings. The drawings may not be to scale. Any of the figures may be combined into a single example or embodiment.

DETAILED DESCRIPTION

There are two main types of automatic text summarization: abstractive and extractive. The choice between extractive and abstractive summarization depends on various factors, including the specific requirements of the task, the nature of the input text, and the desired characteristics of the summary.

Abstractive methods generate a summary by paraphrasing the main points of the text, while extractive methods select a subset of sentences from the text that represent the summary. The abstractive method emulates human summarization in that it uses a vocabulary beyond the specific text, abstracting key information and typically generating a smaller size of context. Abstractive methods can produce more concise and coherent summaries, but they may also introduce factual errors or semantic inconsistencies. Typically, abstractive methods require more computational resources and training data, but they can be more flexible and adaptable to different domains and tasks. While the benefit of this approach is to make the summary concise and human understandable, it brings challenges to automation and scalability, requiring a great number of graphic processing units (GPUs) and big data to train deep learning models or complex algorithms with limited generalizability.

For example, conventional summarization methods leverage generative models, such as pre-trained large language models (LLMs). However, LLMs have two main drawbacks, resource cost and token limit. LLMs require significant computational resources for both training and inference, with the technical cost being directly proportional to the number of tokens in an application programming interface (API) request and response. **In** addition, LLMs have a maximum token limit for the input, which includes the prompt and any context provided. Currently, common production LLMs are limited to around 4,000 tokens, with select LLMs reaching up to 32,000 tokens. However, in some examples, each group of data text contains thousands of entries, and each entry length could be hundreds of tokens. Thus, the most powerful current LLMs cannot handle such large sizes of text data as direct input to perform summarization tasks. Even with advancements that allow a new LLM to handle such large token counts, the inference cost and performance might still be unsatisfactory. The sheer volume and diversity of the context in these large text sizes can lead to increased processing times and unsatisfactory output, posing significant challenges in achieving efficient and effective summarization.

Extractive summarization methods utilize the raw structures, sentences, and phrases to output a summary leveraging only the context from the source material. While this approach preserves the source content with simplicity and speed, it may include redundant and repetitive information in the summary as well as difficulty to handle novel information or concepts that are not explicitly stated in the source text. When compared to abstractive methods, extractive methods are simpler and faster, but they can be limited by the quality and diversity of the input sentences. With existing systems, there is no holistic, systematic way to combine abstractive and extractive methods.

In contrast, aspects of the disclosure provide a system and method for a hybrid summarization model. The summarization model includes a combination of both abstractive and extractive summarization, leveraging extractive methods to identify the most salient sentences and applying abstractive methods (e.g. LLMs) to rewrite those sentences into a shorter and smoother summary. For example, in a data processing and filtering operation, an extractive method is applied to identify the most important and representative sentences from a text corpus and, in a summary generation operation, examples described herein utilize a LLM (e.g., abstractive summarization) to generate a topic summary based on filtered outputs from a previous extractive operation. The system and methods describe herein thus ensure accuracy and technical efficiency by utilizing the "important" portions of a source text while also preserving conciseness and coherence of a final summary output using the LLM as a last layer to capture an essence of the semantic meaning to generate a summary.

The disclosure operates in an unconventional manner at least by using trained models to unify extractive and abstractive methods in a systematic flow to automatically analyze and summarize text data. Aspects of the disclosure are capable of handling unstructured data with diverse context and extremely long text length by leveraging a hybrid model of abstractive LLM methods and extractive methods. The system and methods described herein are adaptable and can be applied to interpret any grouped data within a single context or multiple contexts (e.g., thousands of contexts) that contains a large number of individual text pieces.

By unifying the abstractive and extractive methods, the systems and methods described herein provide several advantages and benefits, such as: time savings, by summarizing long and complex documents from variety of contexts; information overload reduction, by providing summaries that filter out noise and redundancy; knowledge extraction, by highlighting key points, facts, opinions, and sentiments from text data, which can facilitate knowledge extraction and analysis; and information accessibility, by making information more accessible and understandable to different audiences, such as non-experts, people with disabilities, or people who speak different languages.

The system and methods described herein provide automatic text summarization that extracts the most relevant and salient information from large volumes of text data. These text summarization techniques described herein enable computationally faster and more technically effective decision making, knowledge discovery, and information retrieval than conventional systems and methods. For example, with respect to customer support, the industry aims to listen to every customer, but reviews only a small percentage of closed tickets, missing out on valuable feedback as manual analysis of support cases is time-consuming, which limits insights. With the number of support tickets to review each month exceeding 200k for many corporations, only a fraction is being reviewed (e.g., less than 3k). Thus, the systems and methods described herein provide an automatic text summary solution that automates the case review process enabling these companies to better understand customer feedback by clustering similar tickets, summarizing the key information from each group, tracking volume trends, and prioritizing incidents for review.

In some examples, the system and methods described herein are implemented within graph-based ranking models used for text summarization and keyword extraction in natural language processing (NLP). For example, these graph-based ranking models construct a graph where nodes represent text units (e.g., words for keywords, sentences for summarization) and edges represent their relationships based on co-occurrence or similarity. By iteratively calculating the importance of each node based on the importance of its neighbors, the most significant elements in the text are identified and ranked. The top-ranked nodes are selected to form a summary or extract key terms, effectively condensing the original text while preserving its essential information.

In some examples, the systems and methods described herein are implemented with summarization services that introduces a service that utilizes bidirectional encoder representations from transformers (BERT) model for text embeddings and K-means clustering to extractive summarization through the clustering of output embeddings from deep learning models.

In some examples, the systems and methods described herein are implemented with automatic document summarization models that use sentence-based Structural Topic Modeling (STM) to determine important content for each domain in an integrated document and sentences are grouped using K-means clustering under each topic.

In some examples, the system and methods described herein are implemented within transformer-based models, such as generative pre-trained transformer (GPT) in various natural language processing tasks, such as summarization, by leveraging large-scale pre-training on vast amounts of text data.

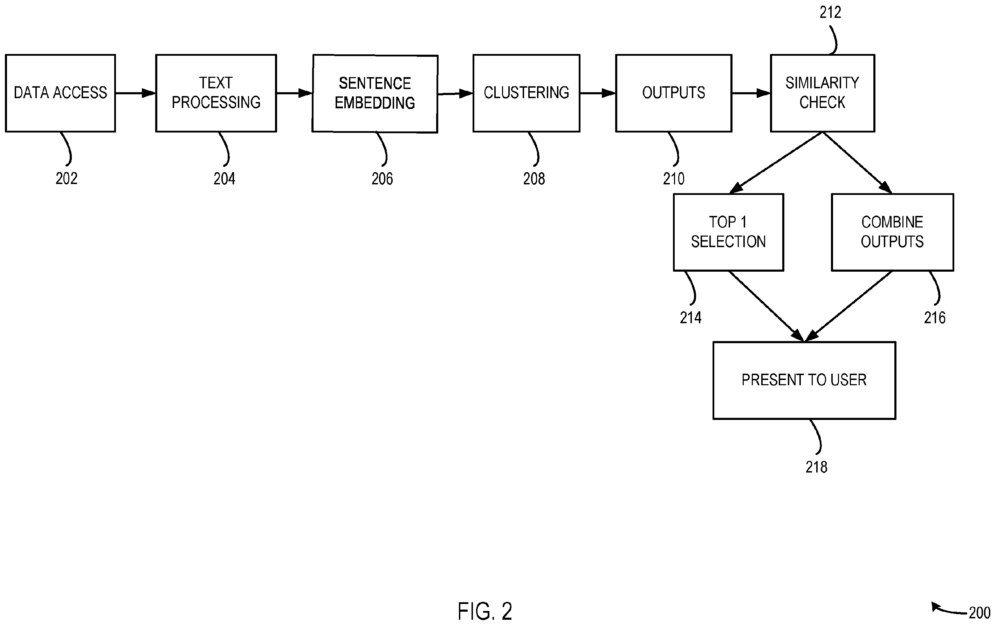

For example, FIG. 1 is a block diagram illustrating an example system 100 for generating summaries using a hybrid summarization model. In some examples, the system 100 includes a server device 102 that includes a memory 104, a processor 108, and a summarization component 110. The memory 104 comprises computer executable instructions (e.g., instructions 106), that when executed by the processor 108, cause the processor to perform operations described herein with respect to Figures 2-6.

The system 100 further incudes database 112 that includes text data from a variety of sources, such as information from other databases, domains, and/or users (e.g., users 114), such as ticket data, product reviews, customer surveys, e-mails, chats, books, websites, and articles. The text data within the database 112 may be accessed and stored periodically (e.g., daily, weekly, monthly), or accessed and stored when prompted by the server device 102. The text data can be diversified and unstructured and can include non-text, such as audio data. In some examples, non-text (e.g., audio data) is transformed into text data into transcript format and thereafter stored within the database 112 for further processing by server device 102. In some examples, data within the database 112 can be in any format, such as comma-separated values (CSV) format, JavaScript object notation (JSON) format, annotated data object script (ADOS) format, and/or error data interchange format (EDIF). In some examples, the database 112 is stored within the server device 102 and/or the information within the database 112 is stored within the server device 102, for example, within the memory 104.

With reference now to FIG. 2, a block diagram illustrating an exemplary summarization workflow 200 is provided. In some examples, each operation 202-218 in the summarization workflow 200 is performed by the summarization component 110. In other examples, the summarization component 110 performs a portion of the operations in the summarization workflow 200.

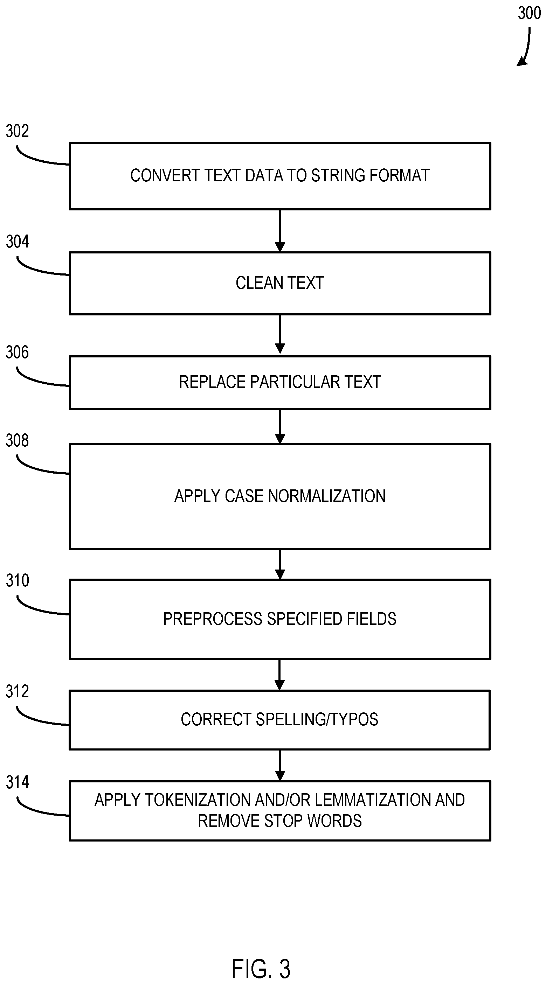

At 202, data stored in the database 112 is accessed by the summarization component 110. In some examples, the server device 102 receives a request to summarize a first type of text data from the database 112. In one example, the summarization component 110 accesses the first type of text data directly from the database 112 or through network 116 to begin text processing (e.g., text pre-processing) as shown in further detail with respect to FIG. 3.

At 204, text processing is performed on the first type of text data. With reference now to FIG. 3, a flowchart illustrating an example method 300 for performing text processing on the first type of text is provided. At 302, the text from the first type of text is converted to string format. In some examples, the conversion to string format enables the first type of text data to be consistently interpreted and manipulated by various programming languages and software tools. String format ensures compatibility and interoperability between different systems and components. When data is represented as strings, it can be easily transmitted over networks, stored in databases, or processed by various programming languages and libraries, and provides compatibility required for a wide range of applications and systems. At 304, the first type of text data is cleaned to remove, for example, stop words, hyperlinks, hyper text markup language, white space, special characters and symbols, and the like. In some examples, the operation at 304 can be skipped if the first type of text data is not noisy, for example, does not need to be cleaned. At 306, certain text within the first type of text data is replaced. For example, acronyms in the first type of text data are replaced with the terms represented by the acronym, and other terms that are shorted or abbreviated may also be replaced with the full terms they represent. At 308, the text within the first type of text data is case normalized, for example, all uppercase or lowercase. In some examples especially in sentence transformer models, the operation at 308 is skipped if some tasks or applications are case-sensitive, meaning that distinctions between uppercase and lowercase letters matter, where preserving the original case of the text is desired. Whether or not case normalization is needed depends on the specific requirements of the task and the characteristics of the data. Aspects of the disclosure encompass different preprocessing techniques, each of which can have a different impact on the performance of the model.

At 310, specified fields in the first type of text data are processed to mask or remove particular data (e.g., private information) for security purposes, such as credit card numbers, social security numbers, phone numbers, addresses, etc. In some examples, data that is considered private is based on the type of data being summarized, and thus, different levels of scrutiny with respect to what is considered private will apply. At 312, typos, spelling, and some grammatical errors are corrected. At 314, the first type of text data is tokenized, enabling the first type of text data to be converted into a format that can be easily processed by the summarization component 110. In some examples, lemmatization is also applied to the first type of text data and stop words are removed from the first type of text data.

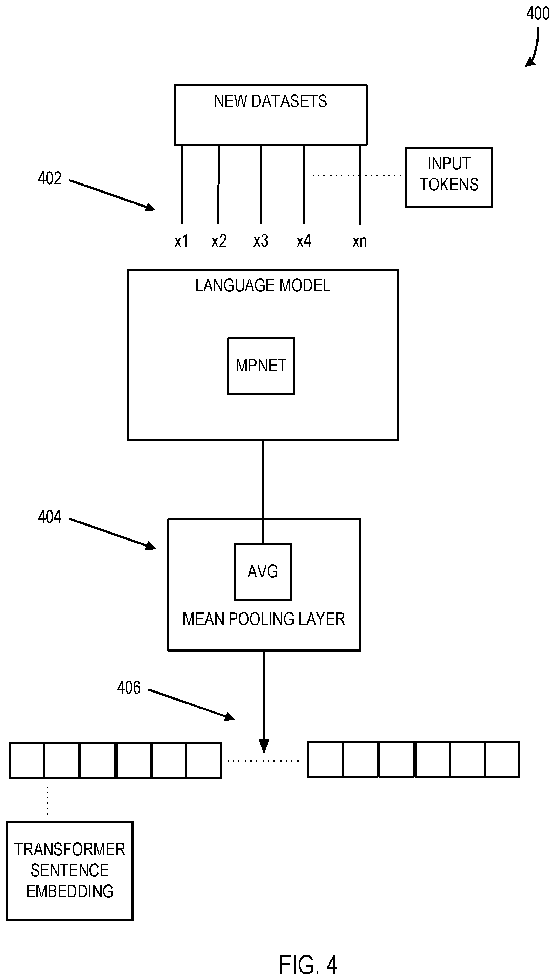

With reference back to FIG. 2, at 206, sentence embedding is performed on the first type of text data. In some examples, machine learning models cannot understand text and can only understand continuous numerical data. In these examples, to train a machine learning model, sentence embedding is performed to convert sentences within the first type of text data into fixed sized vectors in a continuous vector space. The sentence embedding at 206 enables the capturing of semantic similarities and relationships between sentences, enabling various Natural Language Processing (NLP) tasks, such as semantic search, text clustering, and information retrieval. FIG. 4 is an example architecture of sentence embedding utilizing sentence-transformer 400, which is designed for generating sentence embeddings using pre-trained models. While sentence-transformer is shown in FIG. 4, other forms of sentence embedding are also contemplated herein.

As shown in FIG. 4, tokens (e.g., tokens x1-xN) from the tokenization performed in operation 314 in FIG. 3, are forwarded/fed to a language model at 402, such as masked and permuted pre-training for language understanding (e.g., MPNet), which is a combination of a masked language model (e.g., BERT) and a permuted language model (e.g., eXtreme Language model pre-training (XLNet)). In some examples, MPNet is used to inherit the advantages from both BERT and XLNet models and avoid their respective limitations. MPNet corrects the limited dependency modeling of BERT by incorporating a permuted language modeling approach, allowing comprehensive token dependency handling. Unlike XLNet, which may face position discrepancies during fine-tuning, MPNet introduces position compensation strategies to maintain consistent positional awareness across different training stages. This hybrid method enables MPNet to achieve a more comprehensive understanding of language context, combining the positional awareness and robust training methodology of BERT with the flexible contextual understanding of XLNet. At 404, after each token (e.g., the tokens x1-xN) are embedded, average mean pooling is performed to take an aggregation of the token embedding to a sentence level. At 406, the output is text as a continuous vector, which represents a token meaning as well as a semantic relationship between different tokens.

While described with reference to MPNet, BERT, and XLNet, aspects of the disclosure are not limited to any specific language models. For example, the workflow described herein is operable with sentence transformer models other than MPNet.

With reference back to FIG. 2, after the sentence embedding at 206, clustering is performed at 208. In some examples, an assumption is made that the most representative sentences within a cluster are the ones whose embedding are closest to the cluster centroid. In some examples, K-means clustering is used; however, other clustering models may be used herein.

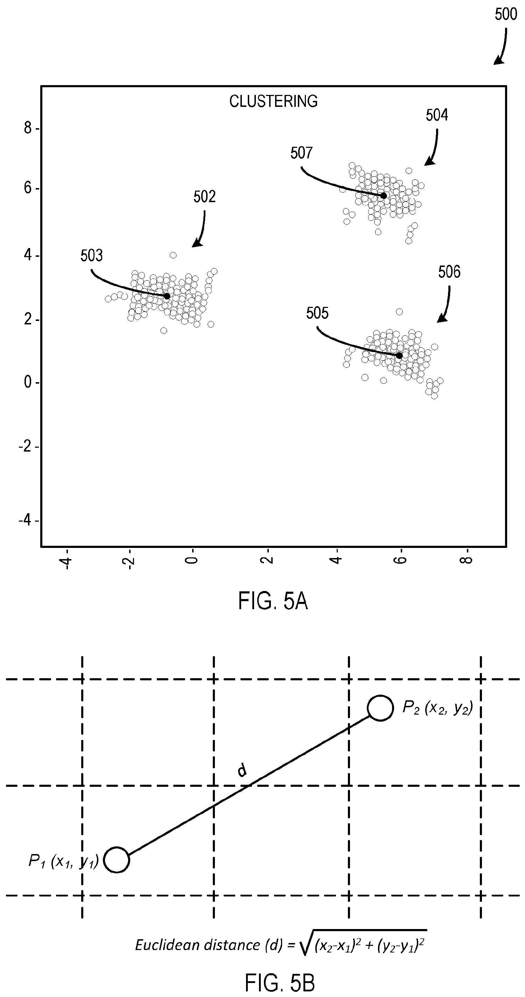

With reference to FIG. 5A, an exemplary clustering graph 500 is shown illustrating three different clusters (e.g., cluster 502, 504, and 506), each representing different topics and each having a respective cluster centroid (e.g., cluster centroids 503, 505, and 507), which are found by applying K-means. The nearest neighbors to each of the cluster centroids 503, 505, and 507 are found using, for example, the K nearest neighbors algorithm in terms of the Euclidean distance between each neighbor and the respective cluster centroid within each of the clusters 502, 504, and 506. FIG, 5B illustrates an exemplary graph and formula for the K nearest neighbor algorithm using the Euclidean distance. An output (e.g., output 210 in FIG. 2) to the K nearest neighbors algorithm is, for each cluster, K sentences in K topics as the nearest neighbors to the respect cluster centroid. In some examples, the number of K sentences in each cluster varies. Thus, one cluster may have three sentences, another cluster may have ten sentences, while another cluster may only have one sentence as nearest neighbors. That is, the number of K sentences is based on how many sentences are with a threshold distance from the cluster centroid. However, as the number of K sentences increases in each cluster, the more computing costs are incurred. As such, there is a balance given that keeping K as large as possible increases the compute resources needed, while keeping K very small may result in a summary that is not representative of each cluster.

With reference back to FIG. 2, a similarity check 212 is performed to determine whether the K sentences within each cluster are repetitive or not. In some examples, cosine similarity is used as the cosine similarity is a well-defined similarity measure between two non-zero vectors. The cosine similarity formula is provided below as equation (1), where $A_i$

and $B_i$ are components of vectors A and B respectively.

$$\cos\_sim(A, B) = \cos(\theta) = \frac{A \cdot B}{\|A\|\|B\|} = \frac{\sum_{i=1}^{n} A_i B_i}{\sqrt{\sum_{i=1}^{n} A_i^2}\sqrt{\sum_{i=1}^{n} B_i^2}} \qquad (1)$$

In some examples, since there are more than two sentences (e.g., K sentences/nearest neighbors) in each of the clusters 502, 504, and 506, a similarity score for the combination of the K sentences is determined. In some examples, the formula used to calculate the similarity score used to measure and evaluate the similarity between the multiple sentences (e.g., K sentences) is provided in equation (2) below, for top n outputs $C_n$, and wherein (C(n,2)) denote the combination of any two outputs $i, j \in C_n$).

$$sim(C_n) = \frac{1}{len(C_{(n,2)})} \sum_{\substack{i,j \in C(n,2), \\ i \neq j}} \cos\_sim(i, j) \qquad (2)$$

After the similarity scores for each set of K sentences in each cluster is determined, for each of the clusters 502, 504, and 506, it is determined whether the similarity score for the K sentences indicate that the K sentences are similar with each other or not. In some examples, a similarity score threshold is used to determine whether the similarity score for the K sentences indicates that the K sentences are similar with each other or not. The similarity score threshold is a tuning parameter that, in some examples, is defined by a user or administrator. In some examples, when the user is more conservative and desires the K sentences to be very similar or almost identical, the similarity score threshold is closer to 1.0, for example 0.90 or 0.95. In contrast, when the user is more optimistic and thus desires the K sentences to be only somewhat similar, the similarity score threshold is lowered to be closer to 0.5 or 0.6.

In an example, the similarity score threshold being used is 0.8 and the three nearest neighbor sentences in three respective topics for a single cluster are as follows:

| | |
|---|---|
| Top 1 Topic: | Issue with cloud service cluster upgrade. |
| Top 2 Topic: | Issue with cloud service cluster upgrade. |
| Top 3 Topic: | Cloud service cluster upgrade fails. |

A similarity score for these three sentences is 0.9753, which is greater than 0.8. The closer to 1.0 the similarity score is, the more similar (or even exact) the sentences are to one another. Hence, a similarity score of 0.9753 indicates that these three sentences are very similar. In fact, they are so similar that if only an extractive summary was used to summarize the combination of these three sentences, the extractive summary would be repetitive and may look very similar if not identical to Top 1 Topic sentence. As such, as indicated in 214 in FIG. 2, when the similarity score for a group of K sentences is above the similarity score threshold, the top 1 sentence is selected as the summary, for example, for Top N output $C_n$, only choose the Top 1 summary if $sim(C_n) \geq 0.8$. As such, a summary of the combination of the three sentences is not performed.

In another example, the similarity score threshold being used is still 0.8 and the three nearest neighbor sentences in three respective topics for a single cluster are as follows:

| | |
|---|---|
| Top 1 Topic: | Pods stuck in terminating state - unable to deploy, restart or delete pods. |
| Top 2 Topic: | Pods not getting into ready state. |
| Top 3 Topic: | Pods are stuck in pending state with no events. |

A similarity score for these three sentences is 0.7653, which is less than 0.8. The closer to 0.0 the similarity score is, the more different (dissimilar) the sentences are to one another. A similarity score of 0.7653 indicates that these three sentences are only somewhat similar, at least when compared to the previous example. Since the similarity score is below the similarity score threshold, and as indicated at 216 in FIG. 2, an abstract summarization is applied to these three sentences, for example, for the Top N output $C_n$, if $sim(C_n) \leq 0.8$, the Top N outputs are concatenated. As a result of the abstract summarization, the summary results in the following sentence summary "Cloud support is experiencing issues with pods getting stuck or not getting into proper state in clusters". Thus, the summary in this example produces a very good summary of the three sentences, and much better than simply using only an extractive summary.

In another example, the similarity score threshold being used is still 0.8 and the three nearest neighbor sentences in three respective topics for a single cluster are as follows:

Top 1 Topic:    Not able to connect to the server.
Top 2 Topic:    Not able to connect VM.
Top 3 Topic:    Network adapter is disabled in multiple machines.

A similarity score for these three sentences is 0.502, which is low when compared to 0.8. The closer to 0.0 the similarity score is, the more different (e.g., dissimilar) the sentences are to one another. Hence, a similarity score of 0.502 indicates that these three sentences are not very similar. Since the similarity score is below the similarity score threshold, an abstract summarization is applied to these three sentences. As a result of the abstract summarization, the summary results in the following sentence summary "The cloud support issues are related to connectivity problems, including difficulty connecting to servers through VMs and multiple machines with disabled network adapters". Thus, the summary in this example produces a very good summary of the three sentences, and much better than simply using only an extractive summary.

With reference back to FIG. 2, in each of the above examples, at 218, the summary of each cluster (e.g., clusters 502, 504, and 506) is presented to a user. In other examples, the summary of each cluster is stored in the database 112 or in the memory 104.

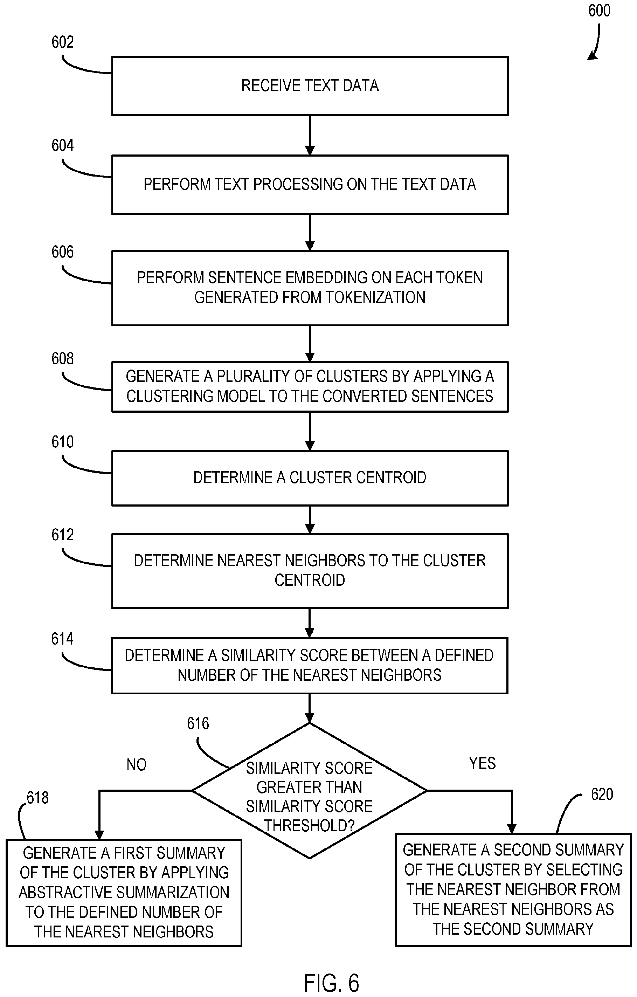

With reference now to FIG. 6, a flowchart illustrating an example method 600 for a hybrid summarization workflow is provided. In some examples, the method 600 is executed or otherwise performed by or in association with a system such as system 100 of FIG. 1.

At 602, text data is received, for example, by the summarization component 110. In some examples, the text data includes information from a plurality of different users and/or a plurality of different topics. In some examples, receipt of the text data is a result of the summarization component 110 requesting the text data based on a user request received by the server device 102. In other examples, the text data is received by the summarization component 110 on a periodic basis for the summarization component 110 to keep updated records/summaries of various topics/text. At 604, text processing on the text data is performed by converting the text in the text data to string format and applying tokenization to the converted text. At 606, sentence embedding is performed on each token generated from the tokenization. In some examples, the sentence embedding includes converting sentences to fixed sized vectors in a continuous vector space. In some examples, the fixed sized vectors respectively represent different token meanings and semantic relationships between the different tokens.

At 608, a plurality of clusters is generated by applying a clustering model to the converted sentences. In some examples, the clustering model is a k-means clustering model. In some examples, each cluster in the plurality of clusters represents a different topic. At 610, a cluster centroid is determined for each cluster in the plurality of clusters, at 612, nearest neighbors to the cluster centroid are determined for each cluster in the plurality of clusters, and at 614, a similarity score between the defined number of the nearest neighbors is determined for each cluster in the plurality of clusters. In some examples, determining the nearest neighbors is in terms of Euclidean distance. In some examples, the nearest neighbors are within a threshold distance from the cluster centroid. In some examples, the similarity threshold is between 0.8 and 0.9 (e.g., between 80 percent and 90 percent). At 616, the similarity score for each cluster in the plurality of clusters is compared to a similarity threshold (e.g., the similarity score threshold) to determine whether the similarity score is less than or greater than the similarity threshold. At 618, upon determining the similarity score being less than the similarity threshold, a first summary of the cluster is generated by applying abstractive summarization to the defined number of the nearest neighbors. At 620, upon determining the similarity score being greater than the similarity threshold, a second summary of the cluster is generated by selecting the nearest neighbor from the nearest neighbors as the second summary.

Exemplary Operating Environment

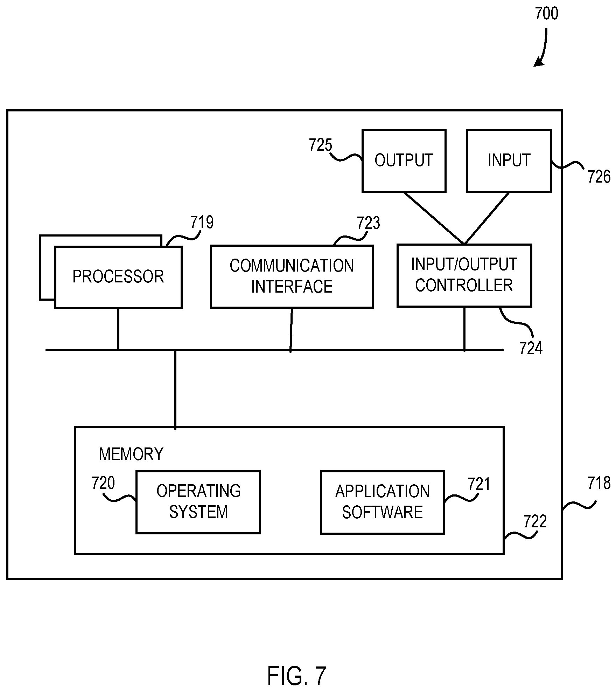

The present disclosure is operable with a computing apparatus according to an embodiment as a functional block diagram 700 in FIG. 7. In an example, components of a computing apparatus 718 (e.g., a server) are implemented as a part of an electronic device according to one or more embodiments described in this specification. The computing apparatus 718 comprises one or more processors 719 which may be microprocessors, controllers, or any other suitable type of processors for processing computer executable instructions to control the operation of the electronic device. Alternatively, or in addition, the processor 719 is any technology capable of executing logic or instructions, such as a hard-coded machine. In some examples, platform software comprising an operating system 720 or any other suitable platform software is provided on the apparatus 718 to enable application software 721 to be executed on the device.

In some examples, computer executable instructions are provided using any computer-readable media that is accessible by the computing apparatus 718. Computer-readable media include, for example, computer storage media such as a memory 722 and communications media. Computer storage media, such as a memory 722, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media embody computer readable instructions, data structures, program modules, or the like in a modulated data signal, such as a carrier wave, or other transport mechanism. As defined herein, computer storage media does not include communication media. Therefore, a computer storage medium is not a propagating signal. Propagated signals are not examples of computer storage media. Although the computer storage medium (the memory 722) is shown within the computing apparatus 718, it will be appreciated by a person skilled in the art, that, in some examples, the storage is distributed or located remotely and accessed via a network or other communication link (e.g., using a communication interface 723).

Further, in some examples, the computing apparatus 718 comprises an input/output controller 724 configured to output information to one or more output devices 725, for example a display or a speaker, which are separate from or integral to the electronic device. Additionally, or alternatively, the input/output controller 724 is configured to receive and process an input from one or more input devices 726, for example, a keyboard, a microphone, or a touchpad. In one example, the output device 725 also acts as the input device. An example of such a device is a touch sensitive display. The input/output controller 724 may also output data to devices other than the output device, e.g., a locally connected printing device. In some examples, a user provides input to the input device(s) 726 and/or receives output from the output device(s) 725.

The functionality described herein can be performed, at least in part, by one or more hardware logic components. According to an embodiment, the computing apparatus 718 is configured by the program code when executed by the processor 719 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

An example system comprises: a processor; and a memory comprising computer-executable instructions that, when executed by the processor, cause the processor to perform the following operations: receiving a text data, the text data comprising information from a plurality of different users; performing text processing on the text data, the text processing comprising: converting text in the text data to string format; and applying tokenization to the converted text; performing sentence embedding on each token generated from the tokenization, the sentence embedding comprising converting sentences to fixed sized vectors in a vector space; generating a plurality of clusters by applying a clustering model to the converted sentences; for each cluster in the plurality of clusters: determining a cluster centroid; determining nearest neighbors to the cluster centroid; determining a similarity score between a defined number of the nearest neighbors; comparing the similarity score to a similarity threshold; and upon the similarity score is less than the similarity threshold, generating a first summary of the cluster by applying abstractive summarization to the defined number of the nearest neighbors; and upon the similarity score is greater than the similarity threshold, generating a second summary of the cluster by selecting the nearest neighbor from the nearest neighbors as the second summary.

An example computerized method comprises: receiving text data, the text data comprising information from a plurality of different users; performing text processing on the text data, the text processing comprising: converting text in the text data to string format; and applying tokenization to the converted text; performing sentence embedding on each token generated from the tokenization, the sentence embedding comprising converting sentences to fixed sized vectors in a continuous vector space; generating a plurality of clusters by applying a clustering model to the converted sentences; for each cluster in the plurality of clusters: determining a cluster centroid; determining nearest neighbors to the cluster centroid; determining a similarity score between a defined number of the nearest neighbors; comparing the similarity score to a similarity threshold; and upon the similarity score is less than the similarity threshold, generating a first summary of the cluster by applying abstractive summarization to the defined number of the nearest neighbors; and upon the similarity score is greater than the similarity threshold, generating a second summary of the cluster by selecting the nearest neighbor from the nearest neighbors as the second summary.

An example computer-readable medium comprising computer-executable instructions that, when executed by a processor, cause the processor to perform the following operations: receiving a text data, the text data comprising information from a plurality of different users; performing text processing on the text data, the text processing comprising: converting text in the text data to string format; and applying tokenization to the converted text; performing sentence embedding on each token generated from the tokenization, the sentence embedding comprising converting sentences to fixed sized vectors in a continuous vector space; generating a plurality of clusters by applying a clustering model to the converted sentences; for each cluster in the plurality of clusters: determining a cluster centroid; determining a defined number of nearest neighbors to the cluster centroid; and generating a summary of the cluster by applying an abstractive summarization to the defined number of the nearest neighbors.

Alternatively, or in addition to the other examples described herein, examples include any combination of the following:

- wherein the fixed sized vectors respectively represent different token meanings and semantic relationships between the different tokens.
- wherein determining the nearest neighbors is in terms of Euclidean distance.
- wherein the nearest neighbors are within a threshold distance from the cluster centroid.
- wherein determining the similarity score between the defined number of the nearest neighbors comprises applying a cosine similarity.
- wherein the similarity threshold is between 80 percent and 90 percent.
- wherein each cluster in the plurality of clusters represents a different topic, and wherein the clustering model is a k-means clustering model.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**Claims**

1. A system comprising:

   a processor; and
   a memory comprising computer-executable instructions that, when executed by the processor, cause the processor to perform the following operations:

   receiving a text data;
   performing text processing on the text data, the text processing including:

   converting text in the text data to string format; and
   applying tokenization to the converted text;
   performing sentence embedding on each token generated from the tokenization, the sentence embedding including converting sentences to fixed sized vectors in a vector space;
   generating a plurality of clusters by applying a clustering model to the converted sentences;
   for each cluster in the plurality of clusters:

   determining a cluster centroid;
   determining nearest neighbors to the cluster centroid;
   determining a similarity score between a number of the nearest neighbors;
   comparing the similarity score to a similarity threshold;
   upon the similarity score being less than the similarity threshold, generating a first summary of the cluster by applying abstractive summarization to the defined number of the nearest neighbors; and
   upon the similarity score being greater than the similarity threshold, generating a second summary of the cluster by selecting the nearest neighbor from the nearest neighbors as the second summary.

2. The system of claim 1, at least one of:

   wherein the fixed sized vectors represent a token meaning and a semantic relationship between different tokens;
   wherein determining the nearest neighbors is in terms of Euclidean distance;
   wherein the nearest neighbors are within a threshold distance from the cluster centroid;
   wherein determining the similarity score between the number of the nearest neighbors comprises applying a cosine similarity;
   wherein the similarity threshold is between 80 percent and 90 percent; and
   wherein each cluster in the plurality of clusters represents a different topic, and wherein the clustering model is a k-means clustering model.

3. A computerized method comprising:

   receiving text data;
   performing text processing on the text data, the text processing including:

   converting text in the text data to string format; and
   applying tokenization to the converted text;
   performing sentence embedding on each token generated from the tokenization;
   generating a plurality of clusters by applying a clustering model to the converted sentences;
   for each cluster in the plurality of clusters:

   determining a cluster centroid;
   determining nearest neighbors to the cluster centroid;
   determining a similarity score between a defined number of the nearest neighbors;
   comparing the similarity score to a similarity threshold; and
   upon the similarity score being less than the similarity threshold, generating a first summary of the cluster by applying abstractive summarization to the defined number of the nearest neighbors; and
   upon the similarity score being greater than the similarity threshold, generating a second summary of the cluster by selecting the nearest neighbor from the nearest neighbors as the second summary.

4. The method of claim 3, wherein performing the sentence embedding includes converting sentences to fixed sized vectors in a continuous vector space, and wherein the fixed sized vectors respectively represent different token meanings and semantic relationships between the different tokens.

5. The method of claim 3 or 4, wherein determining the nearest neighbors is performed in terms of Euclidean distance.

6. The method of claim 5, wherein the nearest neighbors are within a threshold distance from the cluster centroid.

7. The method of one of claims 3 to 6, wherein determining the similarity score between the defined number of the nearest neighbors comprises applying a cosine similarity.

8. The method of one of claims 3 to 7, wherein the similarity threshold is between 80 percent and 90 percent.

9. The method of claim 8, wherein each cluster in the plurality of clusters represents a different topic, and wherein the clustering model is a k-means clustering model.

10. A computer-readable medium comprising computer-executable instructions that, when executed by a processor, cause the processor to perform the following operations:

    receiving a text data;
    performing text processing on the text data, the text processing including:

    converting text in the text data to string format; and
    applying tokenization to the converted text;
    performing sentence embedding on each token generated from the tokenization;
    generating a plurality of clusters by applying a clustering model to the converted sentences;
    for each cluster in the plurality of clusters:

    determining a cluster centroid;
    determining a defined number of nearest neighbors to the cluster centroid; and
    generating a summary of the cluster by applying an abstractive summarization to the defined number of the nearest neighbors.

11. The computer-readable medium of claim 10, wherein performing the sentence embedding includes converting sentences to fixed sized vectors in a continuous vector space, and wherein the fixed sized vectors represent a token meaning and a semantic relationship between different tokens.

12. The computer-readable medium of claim 10 or 11, wherein determining the nearest neighbors is performed in terms of Euclidean distance.

13. The computer-readable medium of claim 12, wherein the nearest neighbors are within a threshold distance from the cluster centroid.

14. The computer-readable medium of claim 13, wherein determining a similarity score between the defined number of the nearest neighbors comprises applying a cosine similarity.

15. The computer-readable medium of claim 14, wherein the similarity threshold is between 80 percent and 90 percent, wherein each cluster in the plurality of clusters represents a different topic, and wherein the clustering model is a k-means clustering model.

FIG. 1

FIG. 2

EP 4 657 280 A1

*300*

302 CONVERT TEXT DATA TO STRING FORMAT

304 CLEAN TEXT

306 REPLACE PARTICULAR TEXT

308 APPLY CASE NORMALIZATION

310 PREPROCESS SPECIFIED FIELDS

312 CORRECT SPELLING/TYPOS

314 APPLY TOKENIZATION AND/OR LEMMATIZATION AND REMOVE STOP WORDS

FIG. 3

400

NEW DATASETS

INPUT TOKENS

402

x1  x2  x3  x4  xn

LANGUAGE MODEL

MPNET

404

AVG

MEAN POOLING LAYER

406

TRANSFORMER SENTENCE EMBEDDING

FIG. 4

500

CLUSTERING

507
504
502
503
506
505

FIG. 5A

$P_2 (x_2, y_2)$

d

$P_1 (x_1, y_1)$

Euclidean distance $(d) = \sqrt{(x_2-x_1)^2 + (y_2-y_1)^2}$

FIG. 5B

600

602

RECEIVE TEXT DATA

604

PERFORM TEXT PROCESSING ON THE TEXT DATA

606

PERFORM SENTENCE EMBEDDING ON EACH TOKEN
GENERATED FROM TOKENIZATION

608

GENERATE A PLURALITY OF CLUSTERS BY APPLYING A
CLUSTERING MODEL TO THE CONVERTED SENTENCES

610

DETERMINE A CLUSTER CENTROID

612

DETERMINE NEAREST NEIGHBORS TO THE CLUSTER
CENTROID

614

DETERMINE A SIMILARITY SCORE BETWEEN A DEFINED
NUMBER OF THE NEAREST NEIGHBORS

616

NO   SIMILARITY SCORE
GREATER THAN
SIMILARITY SCORE
THRESHOLD?   YES

618

GENERATE A FIRST SUMMARY
OF THE CLUSTER BY APPLYING
ABSTRACTIVE SUMMARIZATION
TO THE DEFINED NUMBER OF
THE NEAREST NEIGHBORS

620

GENERATE A SECOND SUMMARY
OF THE CLUSTER BY SELECTING
THE NEAREST NEIGHBOR FROM
THE NEAREST NEIGHBORS AS
THE SECOND SUMMARY

FIG. 6

FIG. 7

Europäisches
Patentamt
European
Patent Office
Office européen
des brevets

# EUROPEAN SEARCH REPORT

**Application Number**

EP 25 17 6680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Shopnil Tasmiul Alam ET AL: "Automatic Text Summarization Using Deep Learning Methods", , 18 March 2024 (2024-03-18), XP093297186, DOI: 10.36227/techrxiv.171073069.99938630/v1 Retrieved from the Internet: URL:https://d197for5662m48.cloudfront.net/ documents/publicationstatus/200420/preprin t_pdf/b99e8ad4bb9d1a322b6b0106206cb9c8.pdf [retrieved on 2025-07-17] * abstract * * section "1. Introduction" * * section "3. Methodology" * ----- | 1-15 | INV. G06F16/34 |
| X | GUL MUHAMMAD ADNAN ET AL: "Sentence Embedding Based Semantic Clustering Approach for Discussion Thread Summarization", COMPLEXITY, vol. 2020, no. 2020, 25 August 2020 (2020-08-25), pages 1-11, XP093297204, US ISSN: 1076-2787, DOI: 10.1155/2020/4750871 Retrieved from the Internet: URL:https://scispace.com/pdf/sentence-embe dding-based-semantic-clustering-approach-f or-2c5ybacpjn.pdf> [retrieved on 2025-07-17] * abstract * * section "1. Introduction" * * section "3. Proposed methodology" * ----- | 1-15 | |

TECHNICAL FIELDS
SEARCHED (IPC)

G06F

The present search report has been drawn up for all claims

| Place of search | Date of completion of the search | Examiner |
|---|---|---|
| Berlin | 18 July 2025 | Siódmok, Wojciech |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)